# EUROPEAN PATENT SPECIFICATION

(11) **EP 3 315 794 B1**
(45) Date of publication and mention of the grant of the patent: **29.01.2020**
(21) Application number: 17020494.5
(22) Date of filing: 24.10.2017
(51) Int. Cl.: F16B 13/06, F16B 13/12

(54) **AN EXPANSION PLUG**
SPREIZDÜBEL
CHEVILLE À EXPANSION

(30) Priority: 26.10.2016 PL 41926916
(43) Date of publication of application: 02.05.2018
(73) Proprietor: Koelner Rawlplug IP Spólka z ograniczona odpowiedzialnoscia, 51-416 Wroclaw (PL)
(72) Inventor: ANTOSZCZYK, Robert, 56-400 Olesnica (PL)
(74) Representative: Sleczka, Joanna

(56) References cited:
- DE-A1- 2 840 087
- DE-A1- 3 732 596
- Rawlplug1928: "4ALL: Rawlplug's NEW High Performance Nylon Plug", youtube, 9 May 2013 (2013-05-09), page 1 pp., XP054978130, Retrieved from the Internet: URL:https://www.youtube.com/watch?v=vWa9in 7JgNQ [retrieved on 2018-02-20]

## Description

An expansion plug for fixing on hollow and solid construction elements, is provided for fixing in construction elements having voids inside, e.g. in bricks or paper-based plasterboards, as well as in solid construction elements made e.g. of concrete or calcium silicate.

A Polish patent description No. 202619B3 discloses a plug for fixing on hollow and solid construction elements, with longitudinally extending arms spread out when screwing the expansion-shell bolt into the plug. Expansion arms are connected to each other at the rear end by means of a sleeve end of the plug, through which the expansion-shell bolt is inserted. At the front end by means of a sleeve blade of the plug into which the expansion-shell bolt is screwed. Expansion arms are connected to each other in the circumferential direction by means of a elastic material. The elastic material is interrupted by a few spiral spaced slits.

An expansion plug for fixing on hollow and solid construction elements according to the invention with expansion arms placed along the plug and with stepped cut-outs along the plug. The inlet of the plug is provided with a flange and longitudinal ribs are provided at the flange, while the opposite end of the plug is a tapered sleeve. The expansion plug is characterized in that its length to external diameter ratio is from 6 to 10, and the cut-outs are provided with connectors. The width of the connector is between 0.6 and 2mm. The connectors are rectangular in shape or close to rectangular, and near the flange the connectors are wider and near the tapered sleeve they are narrower.

An expansion plug for fixing on hollow and solid construction elements according to the invention is characterized by a simple construction and easy and durable assembly. It was achieved due to appropriate length to external diameter ratio. With this ratio of the plug, while the expansion-shell bolt is screwed the plug changes its shape forming a knot on the opposite side which locks its position making it suitable for solid and hollow elements, in particular paper-based plasterboards. Upon forming the blocking knot it is possible to unscrew the expansion-shell bolt without damaging the knot. Additionally, arranged connectors and increased width of the connectors near the flange allow for precise guiding of the expansion-shell bolt in spite of considerable length of the plug, allowing appropriate forming of a blocking knot with a shape facilitating stable and durable fixation.

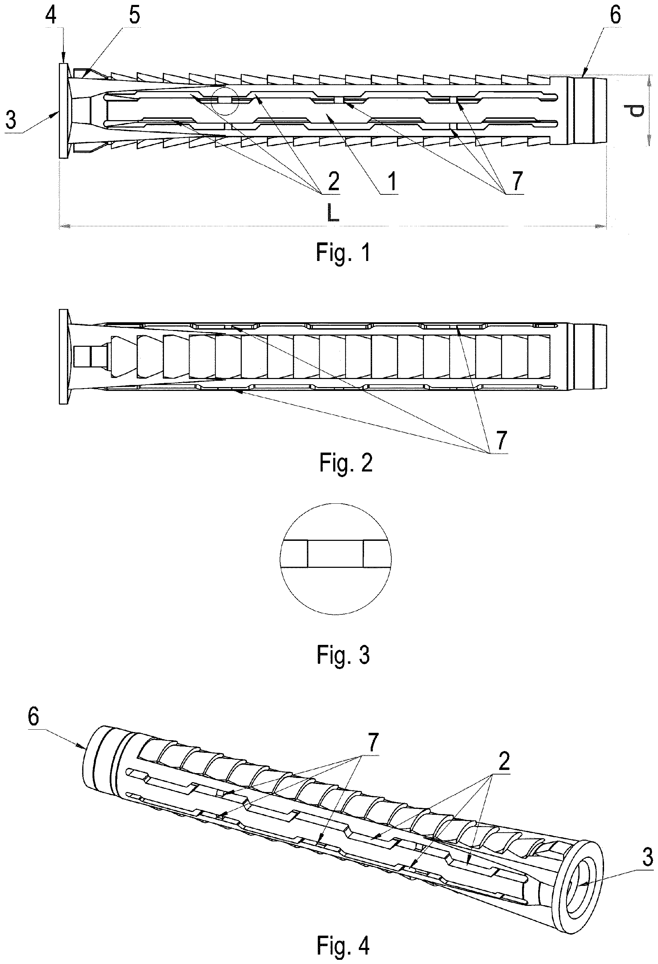

An expansion plug for fixing on hollow and solid construction elements according to the invention, is further explained in the embodiments and the drawings, in which Figure 1 shows a plug is a side view, Figure 2 shows a plug in a plan from the other side, Figure 3 shows a detail of the plug of Figure 1, Figure 4 shows a plug in an axonometric view.

As shown in Fig. 1 - Fig. 4 an expansion plug for fixing on hollow and solid construction elements is formed by expansion arms 1 and with stepped cut-outs 2 along the plug. The inlet of the plug 3 is provided with a flange 4. Longitudinal ribs 5 are provided at the flange 4, while the opposite end of the plug is a tapered sleeve 6. The cut-outs 2 are provided with connectors 7, wherein the connectors 7 near the flange 4 are wider and near the tapered sleeve 6 they are narrower.

**Sample plug sizes:**

| No. | Length L (mm) | Diameter d (mm) | Length L to diameter d ratio |
|---|---|---|---|
| 1 | 50 | 6.37 | 7.8 |
| 2 | 65.5 | 7.5 | 8.7 |
| 3 | 55 | 6 | 9.1 |

## Claims

1. An expansion plug for fixing on hollow and solid construction elements with expansion arms placed along the plug and with stepped cut-outs along the plug, wherein the cut-outs are provided with connectors in rectangular shape or close to rectangular in the cross section, and the inlet of the plug is provided with a flange and longitudinal ribs are provided at the flange, while the opposite end of the plug is a tapered sleeve **characterized in that** its length L to external diameter d ratio is from 6 to 10, and the width of the connectors (7) is between 0.6 and 2mm and the connectors (7) near the flange (4) are wider and near the tapered sleeve (6) they are narrower.

## Patentansprüche

1. Ein Spreizdübel zur Befestigung an leeren und massiven Bauelementen mit den entlang des Dübels angeordneten Spreizarmen und gestuften Schlitzen, wobei die Schlitze mit Verbindern mit rechteckigem oder annähernd rechteckigem Querschnitt versehen sind und der Eingang des Dübels mit einem Flansch versehen ist und am Flansch Längsrippen vorhanden sind, das gegenüberliegende Ende des Dübels bildet hingegen eine konische Hülse, **gekennzeichnet dadurch, dass** ihr Verhältnis der Länge L zum Außendurchmesser d von 6 bis 10 beträgt, und die Breite der Verbinder (7) von 0,6 mm bis 2 mm beträgt, und die Verbinder (7) in der Nähe des Flansches (4) breiter und in der Nähe der konischen Hülse (6) schmaler sind.

## Revendications

1. Une cheville à expansion pour la fixation sur des éléments de construction creux et solides avec des bras d'expansion situés le long de la cheville et avec des fentes étagées le long de la cheville, où les fentes sont équipées de connecteurs de section transversale rectangulaire ou presque rectangulaire, et l'entrée de la cheville est équipée d'une bride, et les nervures longitudinales sont situées à la bride, tandis que l'extrémité opposée de la bride est un manchon conique, **caractérisée en ce que** son rapport de la longueur L au diamètre extérieur d est de 6 à 10, et la largeur des connecteurs (7) est de 0,6 mm à 2 mm et les connecteurs (7) près de la bride (4) sont plus larges et ceux qui sont plus proches du manchon conique (6) sont plus étroits.
